# EUROPÄISCHE PATENTSCHRIFT

(11) **EP 0 956 759 B1**
(45) Veröffentlichungstag und Bekanntmachung des Hinweises auf die Patenterteilung: **15.01.2003**
(21) Anmeldenummer: 99106091.4
(22) Anmeldetag: 26.03.1999
(51) Int. Cl.: A01D 78/10, A01B 73/06

(54) **Landmaschine mit grosser Arbeitsbreite**
Farm implement with large working width
Machine agricole à grande largeur de travail

(30) Priorität: 02.04.1998 DE 29806042 U
(43) Veröffentlichungstag der Anmeldung: 17.11.1999
(73) Patentinhaber: Fella-Werke GmbH, D-90537 Feucht (DE)
(72) Erfinder: Kohl, Bernard, 90537 Feucht (DE); Pürrer, Josef, 90537 Feucht (DE)
(74) Vertreter: Matschkur, Lindner Blaumeier Patent- und Rechtsanwälte

(56) Entgegenhaltungen:
- EP-A- 0 346 701
- AU-A- 2 725 177
- DE-A- 3 628 605
- DE-A- 4 107 528
- DE-U- 29 507 032
- DE-U- 29 610 307
- FR-A- 2 538 670
- GB-A- 2 155 297
- US-A- 4 026 093
- US-A- 4 504 076

## Beschreibung

Die Erfindung bezieht sich auf eine Landmaschine mit großer Arbeitsbreite, insbesondere Heumaschine mit mehreren Arbeitskreiseln, bei welcher Rahmenseitenteile zur Verringerung der Arbeitsbreite nach hinten eingeschwenkt werden können und zum Auseinanderfalten, d.h. dem Überbringen von der Transport- in die Arbeitsstellung, sowie zum Aussteifen der Maschine Zugmittel, wie Seile oder Ketten, zwischen der Deichsel und den Rahmenseitenteilen angeordnet sind.

Der Schwenkvorgang der seitlichen Rahmenteile mit den daranhängenden Arbeitswerkzeugen wird meistens von Hand durchgeführt, wozu besonders bei größeren Maschinen enorme Kraftanstrenungen notwendig sind. Aus der EP 739 582 und dem DBGM 296 10 307 sind auch bereits Landmaschinen bekanntgeworden, bei denen das Auseinanderfalten der Rahmenseitenteile von der Transport- in die Arbeitsstellung durch Rückwärtsfahren mit dem Schlepper bei spezieller Stellung der Stützräder erfolgt. Nachteilig dabei ist, daß zum Vorwählen der dafür erforderlichen Radstellungen und zum Lösen bzw. Einrasten der jeweiligen Arretier- und Versteifungsvorrichtung vom Schlepper abgestiegen und in den Gefahrenbereich der Maschine getreten werden muß.

Der Erfindung liegt daher die Aufgabe zugrunde, eine Vorrichtung zu schaffen, bei welcher der Umstellvorgang und das Aussteifen der breiten Maschine in die Arbeitsstellung vom Schleppersitz aus erfolgen kann.

Zur Lösung dieser Aufgabe ist erfindungsgemäß vorgesehen, daß die Zugmittel über vom Fahrersitz steuerbare, kraftbetätigte, vorzugsweise hydraulische, Stellglieder umfassende Spannvorrichtungen gespannt werden können. Die Spannvorrichtungen können dabei bevorzugt längs der Rahmenseitenteile angeordnete einfachwirkende Hydrozylinder mit Seilrollen umfassen, welche den Zylinderhub in einen doppelt so großen Seilspannweg umsetzen, der im wesentlichen der Längendifferenz der Zugmittel zwischen Transport- und Arbeitsstellung entspricht.

Zur Synchronisierung der Verschwenkung der Rahmenseitenteile kann dabei in an sich bekannter Weise auf der Deichsel ein Schiebestück längsverschiebbar gelagert sein, das über Stangen mit den Rahmenseitenteilen verbunden ist und in seinen beiden, der Transport- bzw. Arbeitsstellung entsprechenden Endstellungen arretierbar und vom Fahrersitz her lösbar ist.

Schließlich liegt es auch noch im Rahmen der Erfindung, daß die Spanneinrichtungen in Wirkverbindung mit Stellgliedern für die Laufräder stehen, derart, daß jede Endlage der Spanneinrichtung der jeweils zugehörigen Endlage des Schwenkbereichs der Laufräder entspricht. Damit die Laufräder, deren Radebene ja zum Fahren parallel zur Fahrtrichtung liegen muß, beim Verschwenken von der Arbeitsstellung in die Transportstellung oder umgekehrt, sich nicht querstellen, muß eine entsprechende etwa 90°-Verschwenkung vorgenommen werden.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine Aufsicht auf einen Kreiselzettwender mit sechs Arbeitskreiseln in der Arbeitsstellung, wobei nur das Mittelteil des Maschinenrahmens und das linke Rahmenseitenteil aus Platzgründen dargestellt sind,
- Fig. 2: eine Aufsicht auf die Anordnung nach Fig. 1 in der Transportstellung mit nach hinten geschwenkten Rahmenseitenteilen,

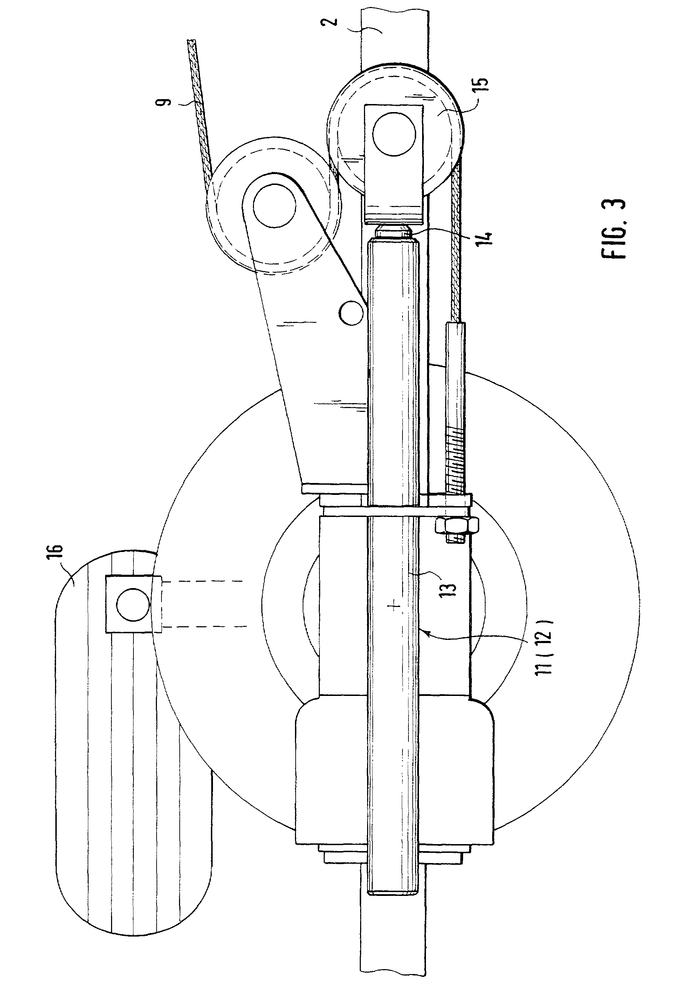

- Fig. 3: einen vergrößerten Ausschnitt III in Fig. 2 mit der Spannvorrichtung in Aufsicht, und

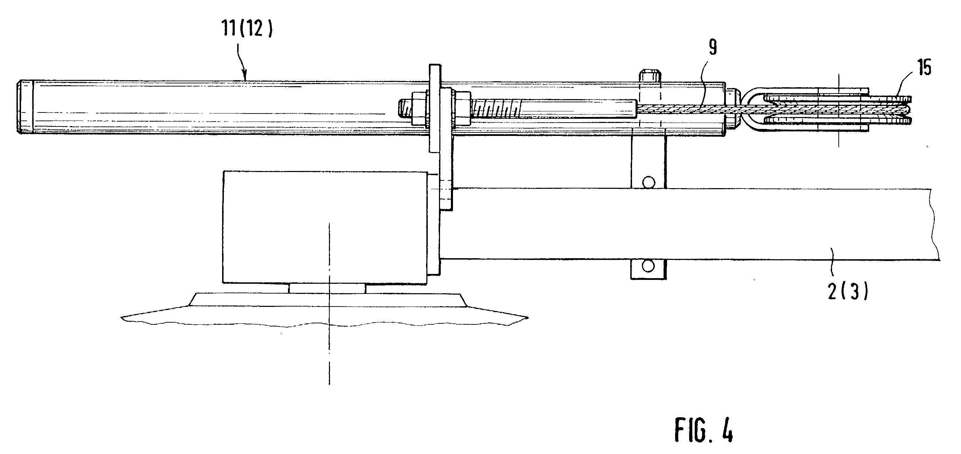

- Fig. 4: eine vergrößerte Seitenansicht der Spannvorrichtung.

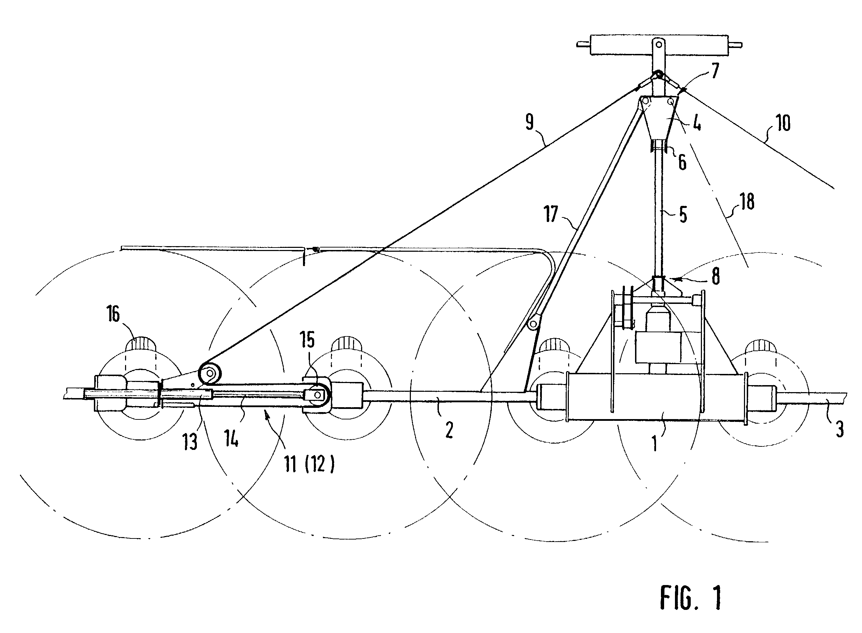

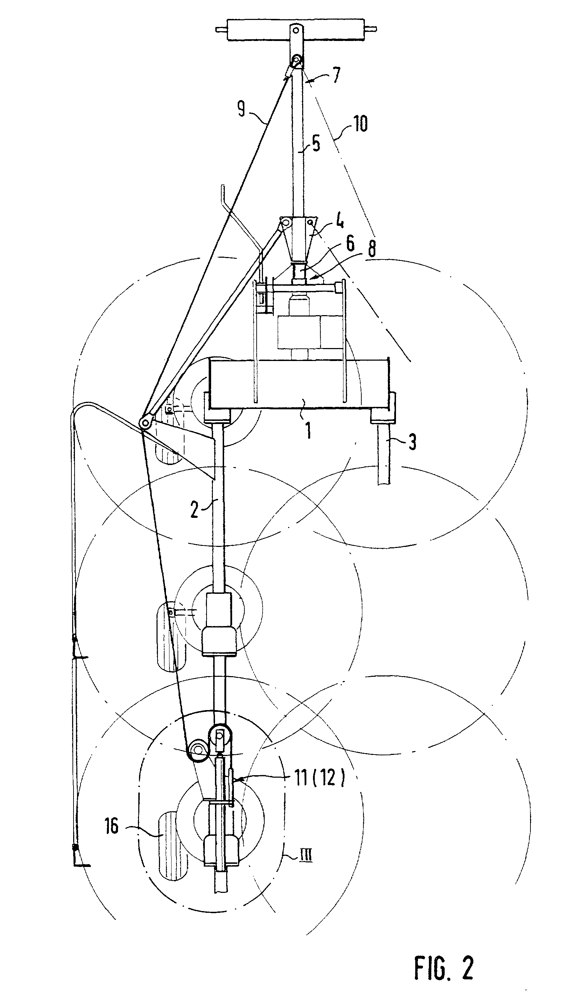

Der zum Anhängen an einen Schlepper ausgebildete Kreiselzettwender besteht aus einem Mittelteil 1, an welchem seitliche, zur Verringerung der Transportbreite nach rückwärts schwenkbare Rahmenseitenteile 2 und 3 angelenkt sind. Über ein Schiebestück 4 auf der Deichsel 5, das über Stangen 17, 18 mit den Rahmenseitenteilen 2, 3 verbunden ist, ist gewährleistet, daß der Schwenkvorgang der beiden Rahmenseitenteile 2, 3 immer gleichzeitig und synchron erfolgt. Auf dem Schiebestück 4 ist eine über einen nicht gezeigten Seilzug vom Schleppersitz aus bedienbare Arretiervorrichtung 6 angeordnet, welche das Schiebestück in den jeweiligen Endstellungen 7 bzw. 8 arretiert. Zwischen der Deichsel 5 und den Rahmenseitenteilen 2, 3 sind, ähnlich wie bei der Anordnung nach dem DBGM 296 10 307, Abspannseile 9, 10 vorgesehen. Diese werden jedoch nicht, wie bekannt, durch federbelastete Spannhebel mit Arretiervorrichtungen, sondern durch jeweils an den linken und rechten Rahmenseitenteilen 2, 3 angeordnete hydraulische Spanneinrichtungen 11, 12 gespannt. Mit Hilfe dieser Spanneinrichtungen können die Rahmenseitenteile aus ihrer nach hinten geschwenkten Transportstellung gemäß Fig. 2 in die Arbeitsstellung nach Fig. 1 auseinandergefaltet werden. Jede Spanneinrichtung 11, 12 umfaßt einen einfachwirkenden Hydrozylinder 13 mit einer am Ende der ausfahrbaren Zylinderstange 14 angeordneten Seilrolle 15, durch welche der Zylinderhub in einen doppelt so großen Spannweg für die Seile 9, 10 umgesetzt wird.

In Arbeitsstellung sind die Hydrozylinder 13 mit einem bestimmten Druck beaufschlagt, wodurch sie in ihrer ausgefahrenen Endlage gehalten werden und die Seile gespannt sind. Die umgekehrte Umstellung von der Transport- in die Arbeitsstellung erfolgt nach Lösen der Arretierung 6 des Schiebestücks 4 auf der Deichsel 5 durch Nach-vorne-Fahren mit dem Schlepper. Der Umstellvorgang wird dabei noch dadurch unterstützt, daß dann gleichzeitig Druck auf den Hydrozylinder 13 gegeben wird, der durch das Spannen der Spannseile 9, 10 die Rahmenseitenteile 2, 3 nach außen in die Arbeitsstellung schwenkt.

Der Umstellvorgang kann dabei noch dadurch unterstützt werden - was allerdings in den Zeichnungen nicht mit dargestellt ist - daß zumindest an einem der schwenkbaren Stützräder 16 jedes Rahmenseitenteils 2, 3 hydraulisch betätigte Stelleinrichtungen vorhanden sind, welche mit der hydraulischen Spanneinrichtung 11, 12 so in Wirkverbindung stehen, daß die Laufräder jeweils in die für die entsprechende Betriebsstellung erforderliche Position gestellt sind.

## Patentansprüche

1. Landmaschine mit großer Arbeitsbreite, insbesondere Heumaschine mit mehreren Arbeitskreiseln, bei welcher Rahmenseitenteile zur Verringerung der Arbeitsbreite nach hinten eingeschwenkt werden können und zum Auseinanderfalten, d.h. dem Überbringen von der Transport- in die Arbeitsstellung, und zum Aussteifen der Maschine Zugmittel, wie Seile oder Ketten, zwischen einer Deichsel und den Rahmenseitenteilen angeordnet sind, **dadurch gekennzeichnet, daß** die Zugmittel (9, 10) über vom Fahrersitz steuerbare, kraftbetätigte, vorzugweise hydraulische, Stellglieder umfassende Spannvorrichtungen (11, 12) gespannt werden können.

2. Landmaschine nach Anspruch 1, **dadurch gekennzeichnet, daß** die Spannvorrichtungen (11, 12) längs der Rahmenseitenteile (2, 3) angeordnete einfachwirkende Hydrozylinder (13) mit Seilrollen (15) umfassen, welche den Zylinderhub in einen doppelt so großen Seilspannweg umsetzen, der im wesentlichen der Längendifferenz der Zugmittel zwischen Transportund Arbeitsstellung entspricht.

3. Landmaschine nach Anspruch 1 oder 2, **dadurch gekennzeichnet, daß** auf der Deichsel (5) ein Schiebestück (4) längsverschiebbar gelagert ist, das zur Synchronisierung der Verschwenkung der Rahmenseitenteile (2, 3) über Stangen (17, 18) mit diesen verbunden ist und in seinen beiden, der Transport- bzw. Arbeitsstellung entsprechenden Endstellungen vom Fahrerssitz her arretierbar und lösbar ist.

4. Landmaschine nach einem der Ansprüche 1 bis 3, **dadurch gekennzeichnet, daß** die Spanneinrichtungen in Wirkverbindung mit Stellgliedern für die Laufräder stehen, derart, daß jede Endlage der Spanneinrichtung der jeweils zugehörigen Endlage des Schwenkbereichs der Laufräder entspricht.

## Claims

1. Farm implement with large working width, in particular hay-making machine with a plurality of work gyroscopes, wherein parts on the frame can be pivoted in at the rear in order to reduce the working width, and for folding out, i.e. during transfer from the transport position into the operating position, and for bracing the machine, traction means, such as cables or chains, are disposed between one drawbar and the parts on the frame, **characterised in that** the traction means (9, 10) can be tensioned via tensioning devices (11,12) comprising power-actuated, preferably hydraulic actuators, and being controllable from the driving seat.

2. Farm implement according to claim 1, **characterised in that** the tensioning devices (11, 12) comprise simply-operating hydraulic cylinders (13) with pulleys (15) disposed along the parts (2, 3) on the frame, the pulleys converting the cylinder stroke into a cable tension distance twice the size, which corresponds substantially to the difference in length of the traction means between the transport position and the operating position.

3. Farm implement according to claim 1 or 2, **characterised in that** on the drawbar (5) a slide member (4) is mounted so as to be longitudinally displaceable, and is connected to the parts (2, 3) on the frame via rods (17, 18) for synchronising the pivoting thereof and is lockable and detachable from the driving seat in both end positions corresponding respectively to the transport position and the operating position.

4. Farm implement according to one of claims 1 to 3, **characterised in that** the tensioning devices are in active connection with actuators for the running wheels, in such a manner that each end position of the tensioning device corresponds respectively to the associated end position of the pivoting range of the running wheels.

## Revendications

1. Machine agricole à grande largeur de travail, notamment faneuse, comportant plusieurs disques rotatifs de travail, dans laquelle des éléments latéraux du châssis peuvent être repliés en arrière par pivotement, afin de réduire la largeur de travail, et des moyens de traction, tels que des câbles ou des chaînes, sont disposés entre une barre d'attelage et les éléments latéraux du châssis, afin de déployer, c'est-à-dire ramener de la position de transport dans la position de travail, et rigidifier la machine, **caractérisée en ce que** les moyens de traction (9, 10) peuvent être tendus par l'intermédiaire de dispositifs de mise en tension (11, 12) comprenant des organes d'ajustement pouvant être commandés depuis le siège du conducteur et actionnés au moyen d'une source d'énergie extérieure, de préférence des organes d'ajustement hydrauliques.

2. Machine agricole selon la revendication 1, **caractérisée en ce que** les dispositifs de mise en tension (11, 12) comprennent des vérins hydrauliques à simple effet (13) disposés le long des éléments latéraux (2, 3) du châssis et munis de poulies de renvoi (15), lesquelles convertissent la course des vérins en un trajet de tension de câble deux fois plus grand, qui correspond sensiblement à la différence de longueur des moyens de traction entre la position de transport et la position de travail.

3. Machine agricole selon la revendication 1 ou 2, **caractérisée en ce que** sur la barre d'attelage (5), est montée, déplaçable en direction longitudinale, une pièce coulissante (4) qui, pour la synchronisation du pivotement des éléments latéraux (2, 3) du châssis, est reliée à ces derniers par l'intermédiaire de tringles (17, 18) et peut, depuis le siège du conducteur, être bloquée et libérée dans ses deux positions extrêmes correspondant respectivement à la position de transport et à la position de travail.

4. Machine agricole selon l'une des revendications 1 à 3, **caractérisée en ce que** les dispositifs de mise en tension sont placés en liaison de coopération avec des organes d'ajustement pour les roues porteuses, d'une manière telle que chaque positionnement final du dispositif de mise en tension corresponde au positionnement final respectivement associé de la plage de pivotement des roues porteuses.
